# EUROPEAN PATENT SPECIFICATION

(11) **EP 2 463 536 B1**
(45) Date of publication and mention of the grant of the patent: **09.11.2016**
(21) Application number: 11192548.3
(22) Date of filing: 08.12.2011
(51) Int. Cl.: F16C 33/20, F16C 37/00, F16C 17/02

(54) **High-pressure fuel pump**
Hochdruckeinspritzpumpe
pompe à injection haute pression

(30) Priority: 09.12.2010 GB 201020877
(43) Date of publication of application: 13.06.2012
(73) Proprietor: Delphi International Operations Luxembourg S.à r.l., 4940 Bascharage (LU)
(72) Inventor: Evans, Gareth, Snodland, Kent ME6 5JG (GB); Rosu, Cristian, Gillingham, Kent ME7 5LX (GB)
(74) Representative: Delphi France SAS

(56) References cited:
- DE-A1- 3 912 716
- DE-A1- 4 200 687
- DE-A1- 19 924 064
- GB-A- 781 085
- JP-A- 2004 092 878
- US-A- 5 131 818
- US-A1- 2002 104 514
- US-A1- 2005 281 498

## Description

### Field of the invention

The present invention relates to a high-pressure pump for a common rail fuel injection system with a bearing assembly.

### Background to the invention

Where a rotating shaft of a mechanical device passes through a housing wall, support member or other component, a journal bearing is usually used to support the shaft whilst guarding against wear of the shaft and the component. Such a bearing allows axial rotation of the shaft, but constrains movement of the shaft in lateral directions to reduce movement and vibration of the shaft. In some cases, movement of the shaft in an axial direction is also constrained by the bearing.

A simple journal bearing design, known as a plain bearing, comprises a tubular bush retained within a bearing housing in a concentric arrangement. The rotating shaft is received within the bush. At least the inner surface of the bush is made from or coated with, or otherwise presents, a low-friction material, so that the shaft can rotate under low-friction and low-wear conditions within the bush. The bearing housing, which may be integrated with another component such as a device housing, supports and retains the bush, and prevents the bush from moving laterally or axially with respect to the housing. In one application, plain bearings are used to constrain and support the input shaft or drive shaft of a high-pressure radial fuel pump, such as the type used in common-rail fuel injection systems. Such pumps are required to pressurise fuel to high pressures, typically of the order of several thousand bar. To reduce exhaust gas emissions and to improve efficiency, it is desirable to increase further the output pressure of such pumps, which in turn requires higher drive shaft rotation speeds. Also, the introduction of start-stop technology to reduce exhaust gas emissions increases the frequency of start-up and switch-off loading on the drive shaft.

The bearings used to retain and support the drive shaft are therefore subject to very high loads. As a result, there is a relatively high risk of bearing failure due to excessive wear, overheating, mechanical failure and other problems.

A known type of bearing assembly used in common-rail fuel pumps includes a tubular three-layer bush (also known as a bushing), received in a tubular housing in a concentric arrangement. The bush comprises an outermost backing layer made from steel, an intermediate metallic layer made from sintered bronze, and an innermost layer made from a relatively thin coating of poly(tetrafluoroethylene)-based material (hereafter, 'PTFE-based material'). In use, the bush is retained in the housing. The drive shaft extends through the bush, and a journal of the shaft rotates against the innermost layer of the bush.

The sintered bronze layer is porous and, to at least some extent, the pores closest to the innermost layer contain some of the PTFE-based material. In use, the PTFE-based material of the innermost layer wears so as to expose the sintered bronze layer underneath. The sintered bronze material has a much greater resistance to wear than the PTFE-based material, so the PTFE-based material in the pores is protected against further wear. Instead, the PFTE-based material that remains in the pores acts as a dry lubricant to lubricate the sliding contact between the rotating drive shaft and the sintered bronze material.

Because the PTFE-based material is relatively thin and flexible, and the sintered bronze material has a relatively low mechanical strength, the steel backing layer is necessary to provide sufficent mechanical support for the bush, to avoid failure of the bearing under high mechanical loads. Heat generated due to the frictional sliding contact of the drive shaft with the PTFE-based material or with the sintered bronze layer is readily dissipated through the bronze layer, the steel backing layer and the bearing housing, aided by the relatively high thermal conductivity of these metallic components.

To improve durability, the PTFE-based material in bearings of this type is, in some cases, replaced with a poly(ether ether ketone)-based material (hereafter, 'PEEK-based material'). The PEEK-based material layer is laminated and cured, and then machined to form the internal bearing surface for the drive shaft.

It is also known in the art to provide cooling passages in a bearing housing to supply cooling fluid to improve heat dissipation from pump bearings, for example as described in JP 2004 092878 A, US2002 0104514, DE19924064 and in US5131818.

Such bearing assemblies are relatively expensive and complex to manufacture. It would therefore be desirable to provide an alternative bearing assembly that is capable of withstanding the high mechanical loads present in high-pressure common-rail fuel pumps, whilst having a simplified construction.

### Summary of the invention

The invention relates to a high-pressure pump for a common-rail fuel injection system according to claim 1.

The inventors of the present invention have discovered that, surprisingly, by combining a bush made entirely from a PEEK (poly(ether ether ketone))-based material with a bearing housing that includes cooling means, a bearing assembly capable of exposure to very high mechanical loading without overheating can be obtained, thereby allowing such a bearing assembly to be used as a drive shaft bearing for a high-pressure common-rail fuel pump. Unlike bearings known as being suitable for such purposes in the prior art, the bush used in the present invention is a single-material component. Therefore the bearing assembly of the present invention is simpler to manufacture than known bearing assemblies with comparable performance that use multi-layer bushes.

Accordingly, from a first aspect, the present invention relates to a high-pressure fuel pump for a common-rail fuel injection system, comprising a bearing assembly, and a rotating drive shaft received in the bearing assembly. The bearing assembly comprises a generally tubular bearing bush made entirely from a PEEK-based material, and defining an inner bearing surface; and a housing comprising a generally cylindrical bore for receiving the bush. The bush and the housing are arranged concentrically around a bearing axis. The housing includes cooling means for cooling the bearing assembly, in use.

The PEEK-based material of the bush may be of any composition suitable for use in bearing applications. In one example, the PEEK-based material comprises at least approximately 50% PEEK by volume. Preferably, the PEEK-based material of the bush comprises approximately 70% PEEK by volume.

The housing comprises retaining means for constraining movement of the bush relative to the housing along the bearing axis. The retaining means may comprise a shoulder of the bore for cooperation with a shoulder of the bush or with an end of the bush. The housing may include a retaining ring to define the shoulder of the bore. Alternatively, or in addition, the retaining means may comprise a crimped portion of the housing.

According to the invention the bush is free to rotate within the housing. In some embodiments of the invention, the bush includes an outer bearing surface. Advantageously, in this arrangement, the rates at which the inner and outer bearing surfaces slide against the drive shaft and the housing, respectively, are lower than the rate of sliding that would otherwise occur if the bush was not able to rotate. Therefore the heat generation and wear rate of such an arrangement is improved, compared to a fixed bearing arrangement.

Preferably, the inner bearing surface of the bush is a continuous cylindrical surface, with no breaks, gaps, steps or similar discontinuities. In particular, the inner bearing surface is preferably continuous in the circumferential direction.

The bush may comprise a tubular portion intermediate two axially-extended end portions. In this way, the length and area of the inner bearing surface of the bush are maximised.

The cooling means may comprise one or more passages for conveying a cooling fluid to the bearing. For example, the cooling means may comprise fluid flow channels in the surface of the bore, for example to allow fuel or another cooling fluid to pass through the bearing assembly. The channel, or at least one of the channels, may extend in a direction generally parallel to the bearing axis. Alternatively, or in addition, the channel, or at least one of the channels, may extend annularly around the bore.

The cooling means may comprise fluid delivery means for delivering fluid to the bore. For example, one or more fluid passages that extend radially through the housing may be provided.

In one embodiment of the invention the cooling means comprises, in combination, a first channel in the surface of the bore that extends parallel to the bearing axis, a second channel in the surface of the bore that intersects the first channel and extends annularly around the bore, and at least one radially-extending passage for conveying fluid to the annular channel through the housing.

Movement of the bush relative to the housing along the bearing axis is constrained by a housing of the fuel pump and/or by a component of the drive shaft.

In one embodiment, the cooling means of the bearing assembly is arranged to receive fuel from the fuel pump to cool the bearing assembly.

In an alternative arrangement, not forming part of the invention, a bearing assembly suitable for use as a journal bearing for a high-pressure fuel pump is provided. The bearing assembly comprises a generally tubular bearing bush defining an inner bearing surface; and a housing comprising a generally cylindrical bore for receiving the bush. The bush and the housing are arranged concentrically around a bearing axis. The housing includes cooling means for cooling the bearing assembly, in use. The housing comprises retaining means for constraining movement of the bush relative to the housing along the bearing axis.

The retaining means may comprise a shoulder of the bore for cooperation with a shoulder of the bush or with an end of the bush. The housing may include a retaining ring to define the shoulder of the bore. Alternatively, or in addition, the retaining means may comprise a crimped portion of the housing.

In a further alternative arrangement, not forming part of the invention, a bearing assembly suitable for use as a journal bearing for a high-pressure fuel pump is provided. The bearing assembly comprises a generally tubular bearing bush defining an inner bearing surface; and a housing comprising a generally cylindrical bore for receiving the bush. The bush and the housing are arranged concentrically around a bearing axis. The bush comprises a tubular portion intermediate two axially-extended end portions. In this way, the length and area of the inner bearing surface of the bush are maximised.

In another alternative arrangement, not forming part of the invention, a bearing assembly suitable for use as a journal bearing for a high-pressure fuel pump is provided. The bearing assembly comprises a generally tubular bearing bush defining an inner bearing surface; and a housing comprising a generally cylindrical bore for receiving the bush. The bush and the housing are arranged concentrically around a bearing axis. The housing includes cooling means for cooling the bearing assembly, in use. The cooling means comprises one or more passages for conveying a cooling fluid to the bearing.

For example, the cooling means may comprise fluid flow channels in the surface of the bore, for example to allow fuel or another cooling fluid to pass through the bearing assembly. The channel, or at least one of the channels, may extend in a direction generally parallel to the bearing axis. Alternatively, or in addition, the channel, or at least one of the channels, may extend annularly around the bore.

The cooling means may comprise fluid delivery means for delivering fluid to the bore. For example, one or more fluid passages that extend radially through the housing may be provided.

The cooling means may comprise, in combination, a first channel in the surface of the bore that extends parallel to the bearing axis, a second channel in the surface of the bore that intersects the first channel and extends annularly around the bore, and at least one radially-extending passage for conveying fluid to the annular channel through the housing.

In these alternative arrangements, the bearing bush may be made entirely from a PEEK-based material, as in the invention. Alternatively, in other arrangements which do not form part of the invention, the bearing bush may be made from a different material, such as PTFE, and/or may be of multi-layered or single-piece construction.

Preferred and/or optional features of each of the arrangements described above may be used, alone or in appropriate combination, in the other arrangements also.

### Brief description of the drawings

Illustrative embodiments of the present invention will now be described, by way of example only, with reference to the accompanying drawings in which like reference numerals will be used for like features, and in which:
Figures 1(a) and 1 (b) are schematic perspective views of a bearing bush and a bearing housing, respectively, of a bearing assembly according to a first embodiment of the invention;
Figure 2(a) is a schematic cross-sectional view of the bearing bush of Figure 1(a);
Figure 2(b) is a schematic cross-sectional view of the bearing housing of Figure 1(b);
Figures 3(a) and 3(b) are schematic part cross-sectional views, taken on different planes, of part of the first embodiment of the invention, showing the bearing bush of Figure 1 (a) and the bearing housing of Figure 1(b) assembled to form the first embodiment of the invention;
Figures 4(a) and 4(b) are schematic perspective views of a bearing bush and a bearing housing, respectively, of a bearing assembly according to a second embodiment of the invention;
Figure 5(a) is a schematic side view of the bearing bush of Figure 4(a); and
Figure 5(b) is a schematic cross-sectional view of the bearing housing of Figure 4(b). It is to be noted that the relative dimensions of the components illustrated in each of the Figures are not drawn to a common scale.

### Detailed description of embodiments of the invention

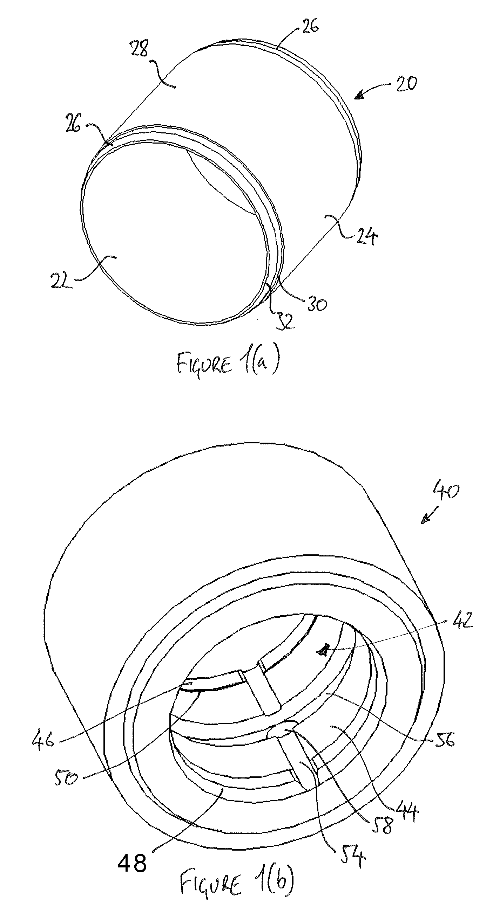

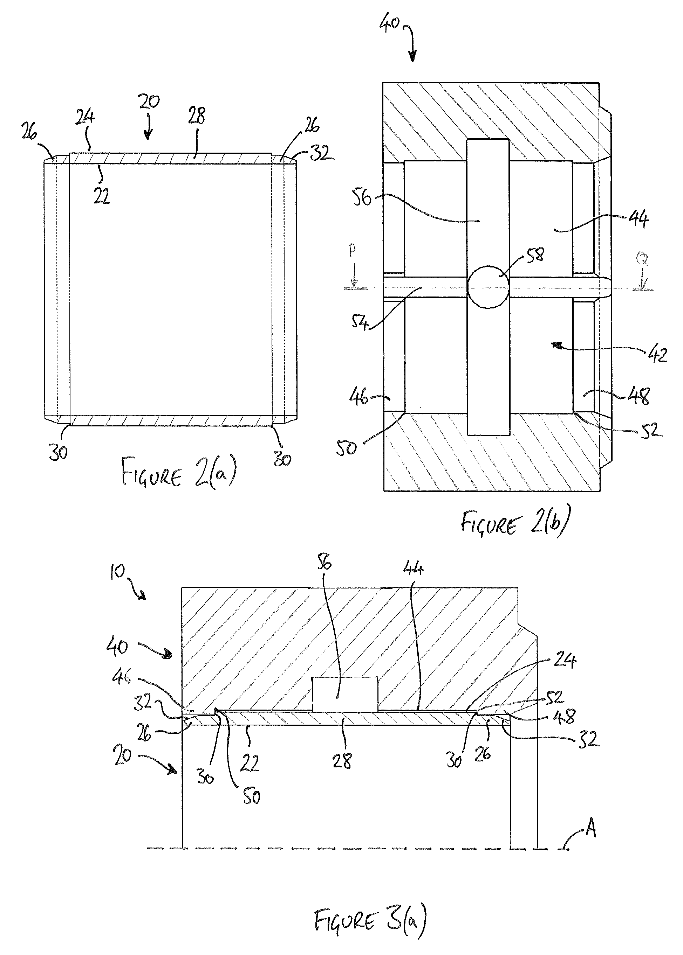

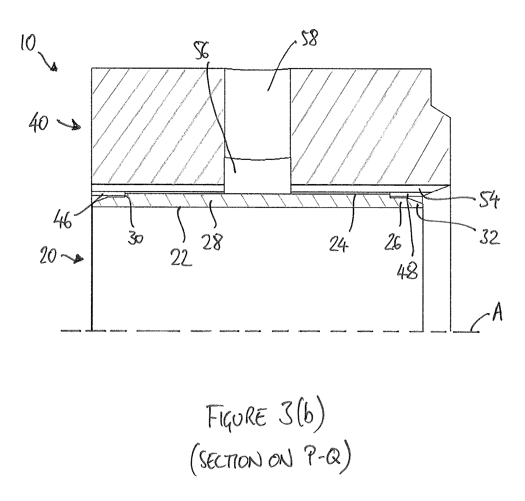

In a first embodiment of the invention, a bearing assembly 10 of a high-pressure fuel pump a bush 20, illustrated in Figures 1(a) and 2(a), and a bearing 40, illustrated in Figures 1 (b) and 2(b). In use, the bush 20 is received within the bearing 40 in a concentric arrangement, as shown in Figures 3(a) and 3(b), to define a bearing axis A.

As shown in Figures 1(a) and 2(a), the bush 20 is a generally tubular component made from a PEEK-based material. The bush 20 defines an inner bearing surface 22, and an outer bearing surface 24. The wall of the bush 20, between the inner and outer surfaces 22, 24, is formed as a single, homogeneous layer of the PEEK-based material, with no additional support or bearing layers.

In this first embodiment, the bush 20 comprises two annular end portions 26 that extend axially from a tubular intermediate portion 28. The end portions 26 have a smaller external diameter than the intermediate portion 28, so that the outer bearing surface 24 of the bush 20 includes a step or shoulder 30 where each end portion 26 meets the intermediate portion 28. The internal diameter of the end portions 26 is the same as the internal diameter of the intermediate portion 28, so that the inner bearing surface 22 is cylindrical and free from steps or other such features. The inner bearing surface 22 is also continuous in the circumferential direction, and is free from gaps, breaks and other discontinuities.

Each end of the bush 20, i.e. at the extremities of each end portion 26, includes a chamfer 32 on its outer edge.

Referring to Figures 1 (b) and 2(b), the housing 40 comprises a generally tubular body having a central cylindrical bore 42 defining a cylindrical surface 44.

At either end of the housing 40, retaining collars or rings 46, 48 are provided, so that the cylindrical surface 44 is intermediate between the retaining rings 46, 48. In this embodiment, the retaining rings 46, 48 are integral with the body of the housing 40. The retaining rings 46, 48 have a reduced diameter compared to the cylindrical surface 44, so as to define inwardly-facing steps or shoulders 50, 52 in the periphery of the bore 42.

As shown in Figure 3(a), which is a cross-sectional view of an assembled bearing assembly taken in the same cross-section plane as Figure 2(b), the dimensions of the bush 20 are such that the intermediate portion 28 of the bush, between the shoulders 30, fits between the shoulders 50, 52 in the periphery of the bore 42. In this way, the shoulders 50, 52 of the retaining rings 46, 48 of the housing serve to retain the bush 20 in the housing 40 and constrain movement of the bush 20 in a direction parallel to the bearing axis A.

The outside diameter of the intermediate portion 28 of the bush 20 is smaller than the diameter of the bore 42 of the bush 20, so that there is a small clearance between the outer bearing surface 24 of the bush 20 and the cylindrical surface 44 of the housing 40. In this way, the bush 20 is free to rotate within the housing 40. In other words, in this embodiment, the bush 20 is a floating bush.

The gap between the cylindrical surface 44 of the housing 40 and the outer bearing surface 24 of the bush 20 is preferably between approximately 20 and approximately 120 microns. The gap between the end portions 26 of the bush 20 and the inner surface of the retaining rings 46, 48 of the housing may be equal to or similar to the gap between the cylindrical surface 44 of the housing 40 and the outer bearing surface 24 of the bush 20, or may be larger.

Referring to Figure 2(b), and additionally to Figure 3(b), the housing 40 includes cooling means that facilitate a flow of cooling fluid through the bearing assembly, in order to transfer the heat generated by friction during operation away from the bearing assembly. The provision of cooling means is particularly beneficial in preventing overheating of the PEEK-based material of the bush 20, which could otherwise cause jamming of the bush 20 due to thermal expansion, and/or shorten the life of the bush 20.

The cooling means includes an axially-extending cooling slot or channel 54 for fluid, formed in the cylindrical surface 44 of the housing. One such axially-extending channel 54 is illustrated, but it will be appreciated that one or more further channels could be provided if required. The axially-extending cooling channel 54 interrupts the cylindrical surface 44 of the housing and also the retaining rings 46, 48, so that the channel 54 provides a path for fluid flow through the bearing assembly in an axial direction.

The cooling means also includes an annular slot or channel 56 that extends around the cylindrical surface 44 of the bore 42. The annular channel 56 provides a path for fluid flow in an annular direction around the bush 20. One annular channel 56, disposed approximately centrally along the length of the cylindrical surface 44, is illustrated, but it will be appreciated that more than one annular channel could be provided.

The cooling means further includes a radial passage or orifice 58 that extends through the wall of the housing 40 to communicate with the annular channel 56. The radial orifice 58 provides a path for fluid flow between the bore 42 and the exterior of the housing 40. Again, only one radial orifice 58 is illustrated, but more than one such orifice could be provided.

Figure 3(b) is a cross-sectional view of the bearing assembly 10 taken on a plane that intersects the axially-extending channel 54, the annular channel 56 and the radial orifice 58, which together form the cooling means of the bearing assembly 10.

When the bearing assembly 10 is used as a drive shaft bearing for a high-pressure common-rail fuel pump (not shown), a journal of the drive shaft is received within the bush 20. A gap, preferably of between approximately 20 and approximately 120 microns, separates the inner bearing surface 22 of the bush 20 from the drive shaft journal.

When the drive shaft rotates, the bush 20 also rotates at a slower speed. The bearing surfaces 22, 24 of the bush serve to constrain lateral movement of the drive shaft, since lateral movement results in sliding contact between the journal and the inner bearing surface 22 of the bush 20, and between the outer bearing surface 24 of the bush 20 and the housing 40. Because the bush 20 is made from a PEEK-based material, sliding contact with the bearing surfaces 22, 24 of the bush 20 are low-friction.

In the fuel pump application, fuel is used as a cooling fluid and as a lubricant. Fuel enters the bearing assembly through one end, and passes between the bush 20 and the housing 40, as well as through the axially-extending channels 54. The annular groove 56 helps to distribute the fuel around the whole circumference of the bush 20. The radial orifice 58 allows evacuation of the fuel from the bearing assembly 10. In this way, heat generated during operation of the bearing assembly 10 can be dissipated through the fuel.

High-performance PEEK-based materials that are suitable for use in bearing applications, and that accordingly offer excellent wear resistance, low coefficient of friction, low coefficient of thermal expansion and high chemical resistance to aggressive environments will be familiar to those skilled in the art. The material from which the bush 20 is made can be readily selected from such materials by a person skilled in the art.

The PEEK-based bush material preferably comprises a majority component of PEEK, and more preferably comprises approximately 70% PEEK by volume. The remainder of the material may include additive components that improve the properties of the material, for example the mechanical stability, the wear resistance, the chemical resistance or the coefficient of friction of the material. Examples of such additive components include carbon fibre, graphite and PTFE. Suitable commercially-available PEEK-based materials for the bush include Victrex (Registered Trade Mark) PEEK 450FC30 and Ensinger (Registered Trade Mark) TECAPEEK PVX.

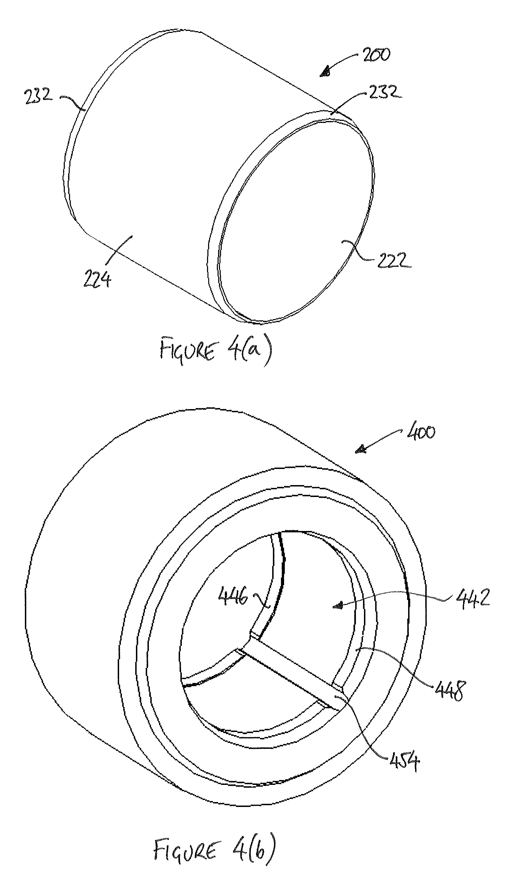

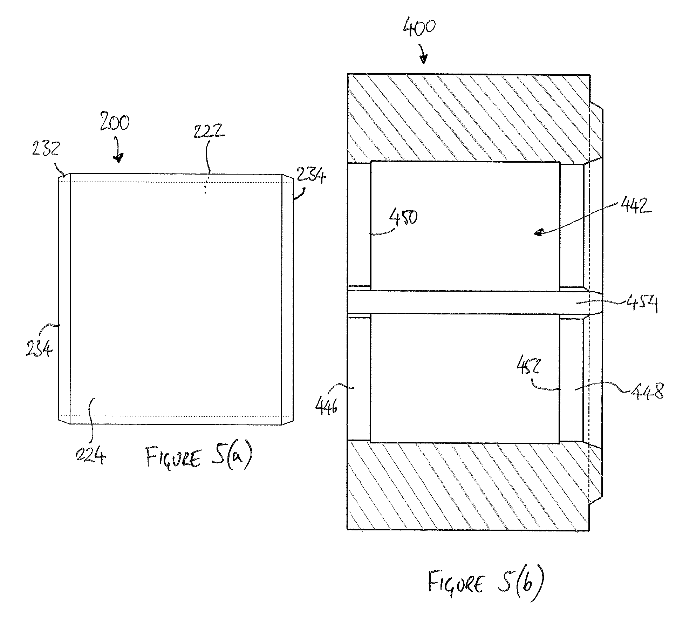

A second embodiment of the invention will now be described with reference to Figures 4(a), 4(b), 5(a) and 5(b). The second embodiment of the invention shares most of its features with the first embodiment of the invention, and only the differences will be described.

Referring first to Figures 4(a) and 5(a), the bush 200 of the bearing assembly comprises a generally tubular component made from a PEEK-based material. The bush 200 is in the form of a plain, continuous tube, with a chamfer 232 on its outer edge at each end. In other words, the bush 200 lacks the extended end portions (26 in Figures 1(a), 2(a), 3(a) and 3(b)) of the first embodiment.

As in the first embodiment, in this second embodiment the bush 200 defines an inner bearing surface 222 and an outer bearing surface 224. The inner bearing surface 222, in particular, is a continuous cylindrical surface which is free from breaks, gaps, steps and other discontinuities.

The housing 400, shown in Figures 4(b) and 5(b), includes a bore 442 and retaining rings 446, 448 that define inwardly-facing shoulders 450, 452 in the periphery of the bore 442, as in the first embodiment. However, in this second embodiment, the cooling means of the housing 400 consists of one or more axially-extending channels 454 for fluid. The annular channel and radial orifice of the housing of the first embodiment are not present.

In use, the bush 400 is received within the bore 442 of the housing 400, and is retained by the retaining rings 446, 448. In this embodiment, the end faces 234 of the bush 200 bear against the shoulders 450, 452 of the housing 400.

The second embodiment of the invention is useful in high-pressure common-rail fuel pump applications in which a fuel pressure differential is present across the bearing assembly, so that fuel is caused to flow through the housing in an axial direction, between the bush 400 and the wall of the bore 442, with the help of the axial channels 454.

It will be appreciated that the bushes 20, 200 and housings 40, 400 of the first and second embodiments are interchangeable. For example, in applications where it is desirable to maximise the length of the inner bearing surface of the bush, so as to increase stability of the drive shaft, the bush 20 of the first embodiment, with its extended end portions 26, can be employed. In other applications, where the length of the inner bearing surface of the bush need not be maximised, the bush 200 of the second embodiment, which is of a simpler design and therefore easier to manufacture, can be used.

In both the first and second embodiments of the invention, the bearing assembly is of the floating bearing type, in which the bush is free to rotate within the housing.

In another embodiment of the invention of the floating bearing type, the bearing housing does not include retaining means, such as retaining rings, for the bush. Instead, axial movement of the bush is constrained by other components of the device in which the bearing assembly is used. For example, in a fuel pump, the bearing assembly may be mounted such that axial movement of the bush in one direction is constrained by a wall of the pump housing, and axial movement in the opposite direction is constrained by a face of a cam on the drive shaft.

In a variation of this embodiment, an end of the bearing housing is crimped to prevent axial movement of the bush towards the cam.

Further embodiments of the invention of the floating bearing type are also possible. Any suitable means for retaining the bush in the housing could be used. For example, the retaining means could comprise one or more separate retaining rings, located in axially-aligned annular grooves in the bush and the wall of the bore of the housing.

In non-inventive embodiment of the bearing assembly of the high-pressure fuel pump the bush is fixed within the housing and is not free to rotate. In this case, only the inner surface of the bush acts as a bearing surface. Because the bush is fixed within the housing, both rotational and axial movement of the bush with respect to the housing is prevented, and additional retaining means for the bush may not be necessary.

In such an arrangement, the bush may be fixed into the housing in any suitable way. For example, the bush may be glued into the housing using a layer of adhesive applied to the outer surface of the bush or the cylindrical surface of the bore.

In another non-inventive arrangement that is not claimed, the outside diameter of the bush is such that the bush is an interference fit within the bore. For example, the bush may have an outside diameter of between 0 and approximately 200 microns greater than the inside diameter of the housing bore before assembly. The bush is press-fitted into the housing, so that the bush is held in the housing under compression.

After insertion of the bush, the internal bearing surface of the bush may be machined in order to ensure dimensional accuracy of the bearing surface. In particular, when the bush diameter is more than about 50 microns larger than the bore diameter before assembly, the deformation of the bush that occurs when it is press-fitted into the housing is such that machining of the bearing surface would be expected to be required. The bush may be manufactured with an internal diameter smaller than the final desired bearing surface diameter, to accommodate removal of material during machining. When the bush diameter is only marginally greater than the housing diameter (for example in the range of 0 to 20 microns), machining may not be necessary.

As will be appreciated, the bearing assembly of the invention may be adapted to include other bearing features known in the art. For example, the bush may include a thrust washer for cooperation with a groove in the shaft, so as to constrain axial movement of the shaft.

Alternative or additional cooling means could be provided to effect cooling of the bearing assembly. For example, cooling passages could be provided within the bearing housing. In addition to or instead of the axially-extending channels and/or annularly-extending channels described above, channels that extend in a helical or other orientation could be provided.

The bush may be manufactured by any suitable plastics forming process. For example, the bush may be injection moulded, extruded or machined from a solid bar or rod. In another example, a plurality of film layers is laid up around a tubular former and laminated to form a solid component. Further examples of possible forming processes include blow moulding, thermoforming, plastic dip coating and plastic spray coating.

It will also be appreciated that features of the embodiments described above could be used in different combinations. For example, a tubular bearing bush made with any suitable construction, may be used in a bearing housing including cooling means for cooling the bearing assembly, in use, and retaining means for constraining movement of the bush relative to the housing along the bearing axis, as described above.

Further modifications and variations of the invention are also possible without departing from the scope of the invention as defined in the appended claims.

## Claims

1. A high-pressure fuel pump for a common-rail fuel injection system, comprising:
a bearing assembly (10; 100); and
a rotating drive shaft received in the bearing assembly (10, 100);
the bearing assembly comprising:
a generally tubular bearing bush (20; 200) made entirely from a PEEK-based material, and defining an inner bearing surface (22; 222); and
a housing (40; 400) comprising a generally cylindrical bore (42; 442) for receiving the bush (20; 200); the bush (20; 200) and the housing (40; 400) being arranged concentrically around a bearing axis (A);
and the housing (40; 400) includes cooling means (54, 56, 58; 454) for cooling the bearing assembly (10; 100), in use and wherein,
the housing (20, 200) comprises retaining means (46, 48, 50, 52; 446, 448, 450, 452) for constraining movement of the bush (20, 200) relative to the housing (40, 400) along the bearing axis (A),
**characterized in that** the bush (20; 200) is free to rotate within the housing (40; 400).

2. The fuel pump of Claim 1, wherein the PEEK-based material of the bush (20, 200) comprises at least approximately 50% PEEK by volume.

3. The fuel pump of Claim 2, wherein the PEEK-based material of the bush (20, 200) comprises approximately 70% PEEK by volume.

4. The fuel pump of Claim 1, wherein the retaining means comprises a shoulder (50, 52; 450, 452) of the bore (42; 442) for cooperation with a shoulder (30) of the bush (20) or with an end (234) of the bush (200).

5. The fuel pump of Claim 1, wherein the retaining means comprises a crimped portion of the housing (40; 400).

6. The fuel pump of any preceding claim, wherein the bush (20; 200) includes an outer bearing surface (24; 224).

7. The fuel pump of any preceding claim, wherein the bush (40) comprises a tubular portion (28) intermediate two axially-extending end portions (26).

8. The fuel pump of any preceding claim, wherein the cooling means comprises one or more fluid flow channels (54, 56, 58; 454) in the surface of the bore (42; 442).

9. The fuel pump of Claim 8, wherein the or at least one of the channels (54; 454) extends in a direction generally parallel to the bearing axis (A).

10. The fuel pump of Claim 8 or Claim 9, wherein the or at least one of the channels (56) extends annularly around the bore (42).

11. The fuel pump of any preceding claim, wherein the cooling means comprises one or more fluid passages (58) that extend radially through the housing (40).

12. The fuel pump of any preceding claim, wherein movement of the bush (20; 200) relative to the housing (40; 400) along the bearing axis (A) is constrained by a housing of the fuel pump and/or by a component of the drive shaft.

## Patentansprüche

1. Eine Hochdruck-Kraftstoffpumpe für ein Common-Rail-Kraftstoffeinspritzsystem, die aufweist:
eine Lageranordnung (10; 100); und
eine rotierende Antriebswelle, die in der Lageranordnung (10; 100) aufgenommen ist;
wobei die Lageranordnung aufweist:
eine allgemein röhrenförmige Lagerbuchse (20; 200), die vollständig aus einem PEEK-basierten Material besteht und eine innere Lagerfläche (22; 222) definiert; und
ein Gehäuse (40; 400), das eine allgemein zylindrische Bohrung (42; 442) aufweist zum Aufnehmen der Buchse (20; 200); wobei die Buchse (20; 200) und das Gehäuse (40; 400) konzentrisch um eine Lagerachse (A) angeordnet sind; und
das Gehäuse (40; 400) Kühlmittel (54, 56, 58; 454) zum Kühlen der Lageranordnung (10; 100) bei Verwendung umfasst, und wobei
das Gehäuse (20, 200) Haltemittel (46, 48, 50, 52; 446, 448, 450, 452) aufweist zum Beschränken einer Bewegung der Buchse (20, 200) relativ zu dem Gehäuse (40, 400) entlang der Lagerachse (A),
**dadurch gekennzeichnet, dass**
die Buchse (20; 200) frei ist zum Rotieren in dem Gehäuse (40; 400).

2. Die Kraftstoffpumpe gemäß Anspruch 1, wobei das PEEK-basierte Material der Buchse (20, 200) zumindest ungefähr 50% PEEK im Volumen aufweist.

3. Die Kraftstoffpumpe gemäß Anspruch 2, wobei das PEEK-basierte Material der Buchse (20, 200) ungefähr 70% PEEK im Volumen aufweist.

4. Die Kraftstoffpumpe gemäß Anspruch 1, wobei das Haltemittel eine Schulter (50, 52; 450, 452) der Bohrung (42; 442) zur Kooperation mit einer Schulter (30) der Buchse (20) oder mit einem Ende (234) der Buchse (200) aufweist.

5. Die Kraftstoffpumpe gemäß Anspruch 1, wobei das Haltemittel einen gecrimpten Teil des Gehäuses (40; 400) aufweist.

6. Die Kraftstoffpumpe gemäß einem vorhergehenden Anspruch, wobei die Buchse (20; 200) eine äußere Lagerfläche (24; 224) umfasst.

7. Die Kraftstoffpumpe gemäß einem vorhergehenden Anspruch, wobei die Buchse (40) einen röhrenförmigen Teil (28) zwischen zwei sich axial erstreckenden Endteilen (26) aufweist.

8. Die Kraftstoffpumpe gemäß einem vorhergehenden Anspruch, wobei das Kühlmittel einen oder mehrere Fluidströmungskanäle (54, 56, 58; 454) in der Oberfläche der Bohrung (42; 442) aufweist.

9. Die Kraftstoffpumpe gemäß Anspruch 8, wobei sich der Kanal oder zumindest einer der Kanäle (54; 454) in eine Richtung allgemein parallel zu der Lagerachse (A) erstreckt.

10. Die Kraftstoffpumpe gemäß Anspruch 8 oder Anspruch 9, wobei sich der Kanal oder zumindest einer der Kanäle (56) ringförmig um die Bohrung (42) erstreckt.

11. Die Kraftstoffpumpe gemäß einem vorhergehenden Anspruch, wobei das Kühlmittel einen Fluiddurchlass oder mehrere Fluiddurchlässe (58) aufweist, der/die sich radial durch das Gehäuse (40) erstreckt/erstrecken.

12. Die Kraftstoffpumpe gemäß einem vorhergehenden Anspruch, wobei eine Bewegung der Buchse (20; 200) relativ zu dem Gehäuse (40; 400) entlang der Lagerachse (A) durch ein Gehäuse der Kraftstoffpumpe und/oder durch eine Komponente der Antriebswelle eingeschränkt wird.

## Revendications

1. Pompe de carburant à haute pression pour un système d'injection de carburant à rampe commune, comprenant :
un ensemble formant palier (10 ; 100) ; et
un arbre d'entraînement rotatif reçu dans l'ensemble formant palier (10, 100) ;
l'ensemble formant palier comprenant :
une douille de palier généralement tubulaire (20 ; 200) réalisée entièrement en un matériau à base de polyéther éther cétone (PEEK) et définissant une surface de palier intérieure (22 ; 222) ; et
un boîtier (40 ; 400) comprenant un perçage généralement cylindrique (42 ; 442) pour recevoir la douille (20 ; 200) ; la douille (20 ; 200) et le boîtier (40; 400) étant agencés concentriquement autour d'un axe de palier (A) ;
et le boîtier (40 ; 400) inclut un moyen de refroidissement (54, 56, 58 ; 454) pour refroidir l'ensemble formant palier (10 ; 100) en utilisation, et dans laquelle le boîtier (20, 200) comprend des moyens de retenue (46, 48, 50, 52 ; 446, 448, 450, 452) pour restreindre un mouvement de la douille (20, 200) par rapport au boîtier (40, 400) le long de l'axe (A) du palier,
**caractérisé en ce que**
la douille (20 ; 200) est libre de tourner à l'intérieur du boîtier (40 ; 400).

2. Pompe de carburant selon la revendication 1, dans laquelle le matériau à base de PEEK de la douille (20, 200) comprend au moins approximativement 50 % de PEEK en volume.

3. Pompe de carburant selon la revendication 2, dans laquelle le matériau à base de PEEK de la douille (20, 200) comprend approximativement 70 % de PEEK en volume.

4. Pompe de carburant selon la revendication 1, dans laquelle les moyens de retenue comprennent un épaulement (50, 52 ; 450, 452) du perçage (42 ; 442) destiné à coopérer avec un épaulement (30) de la douille (20) ou avec une extrémité (234) de la douille (200).

5. Pompe de carburant selon la revendication 1, dans laquelle les moyens de retenue comprennent une portion sertie du boîtier (40 ; 400).

6. Pompe de carburant selon l'une quelconque des revendications précédentes, dans laquelle la douille (20 ; 200) inclut une surface de palier extérieure (24 ; 224).

7. Pompe de carburant selon l'une quelconque des revendications précédentes, dans laquelle la douille (40) comprend une portion tubulaire (28) intermédiaire entre deux portions d'extrémité s'étendant axialement (26).

8. Pompe de carburant selon l'une quelconque des revendications précédentes, dans laquelle le moyen de refroidissement comprend un ou plusieurs canaux d'écoulement de fluide (54, 56, 58 ; 454) dans la surface du perçage (42 ; 442).

9. Pompe de carburant selon la revendication 8, dans laquelle le canal ou l'un au moins des canaux (54 ; 454) s'étend dans une direction généralement parallèle à l'axe (A) du palier.

10. Pompe de carburant selon la revendication 8 ou 9, dans laquelle le canal ou l'un au moins des canaux (56) s'étend de manière annulaire autour du perçage (42).

11. Pompe de carburant selon l'une quelconque des revendications précédentes, dans laquelle le moyen de refroidissement comprend un ou plusieurs passage(s) à fluide (58) qui s'étend(ent) radialement à travers le boîtier (40).

12. Pompe de carburant selon l'une quelconque des revendications précédentes, dans laquelle un mouvement de la douille (20 ; 200) par rapport au boîtier (40 ; 400) le long de l'axe (A) du palier est restreint par un boîtier de la pompe de carburant et/ou par un composant de l'arbre d'entraînement.
